(19) Europäisches Patentamt
European Patent Office
Office européen des brevets

(11) **EP 3 681 691 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **18769610.9**

(22) Anmeldetag: **04.09.2018**

(51) Internationale Patentklassifikation (IPC):
**B29C 49/64** (2006.01)    **B29C 49/78** (2006.01)
**B29C 49/68** (2006.01)    **B29C 49/46** (2006.01)
**B29C 35/08** (2006.01)    **B29K 67/00** (2006.01)
**B29K 23/00** (2006.01)

(52) Gemeinsame Patentklassifikation (CPC):
**B29C 49/6418; B29C 49/6454; B29C 49/68;**
**B29C 49/786;** B29C 49/78; B29C 2035/0822;
B29C 2049/465; B29K 2023/06; B29K 2023/12;
B29K 2067/003

(86) Internationale Anmeldenummer:
**PCT/EP2018/073713**

(87) Internationale Veröffentlichungsnummer:
**WO 2019/048419 (14.03.2019 Gazette 2019/11)**

(54) **HEIZVORRICHTUNG FÜR DIE TEMPERATURKONDITIONIERUNG VON VORFORMLINGEN UND VERFAHREN ZUM BETREIBEN EINER SOLCHEN HEIZVORRICHTUNG**

HEATING DEVICE FOR THE TEMPERATURE CONDITIONING OF PREFORMS, AND METHOD FOR OPERATING A HEATING DEVICE OF THIS KIND

DISPOSITIF DE CHAUFFAGE POUR LE CONDITIONNEMENT THERMIQUE DE PRÉFORMES ET PROCÉDÉ POUR FAIRE FONCTIONNER LEDIT DISPOSITIF DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2017 DE 102017120862**

(43) Veröffentlichungstag der Anmeldung:
**22.07.2020 Patentblatt 2020/30**

(73) Patentinhaber: **KHS GmbH**
**44143 Dortmund (DE)**

(72) Erfinder:
• **ULUTÜRK, Deniz**
**22761 Hamburg (DE)**
• **FIRCHAU, Daniel**
**23911 Schmilau (DE)**
• **ZIMMERING, Bernd**
**22111 Hamburg (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**FR-A1- 2 965 746    US-A1- 2016 144 560**

**Beschreibung**

Die Erfindung betrifft ein Verfahren zum Betreiben einer Heizvorrichtung für die Temperaturkonditionierung von Vorformlingen aus einem thermoplastischen Material nach dem Oberbegriff von Anspruch 1. Die Erfindung betrifft weiterhin eine Heizvorrichtung für die Temperaturkonditionierung von Vorformlingen nach dem Oberbegriff von Anspruch 8. Schließlich betrifft die Erfindung eine Maschine für die Herstellung von Behältern aus Vorformlingen nach dem Oberbegriff von Anspruch 9.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 43 40 291 A1). Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformung hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Auch hier ist es bekannt, diese Umformung durch den Einsatz einer Reckstange zu unterstützen. Auch hier wird der Vorformling vor dem Form- und Füllvorgang zunächst temperaturkonditioniert.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 2010 007 541 A1.

Bezüglich der Temperaturkonditionierung der Vorformlinge sind die Anforderungen im Wesentlichen identisch unabhängig davon, ob in einem nachfolgenden Schritt die Umformung des mit einem geeigneten Temperaturprofil versehenen Vorformlinges mittels Einleiten eines Gases unter Druck oder mittels einer Flüssigkeit unter Druck erfolgt. Die jeweils vorzusehende Heizvorrichtung zum thermischen Konditionieren der Vorformlinge und das jeweils anzuwendende Verfahren zum Betreiben einer solchen Heizvorrichtung sind also für beide bekannten Umformverfahren gleichartig. Die nachfolgend beschriebene Erfindung betrifft beide geschilderten Umformverfahren gleichermaßen.

Im Stand der Technik bekannte Heizvorrichtungen bestehen zum Beispiel aus mehreren sogenannten Heizkästen. Diese Heizkästen sind üblicherweise stationär entlang einer Heizstrecke angeordnet und durch diese Heizkästen werden Vorformlinge mittels geeigneter Transporteinrichtungen hindurchbewegt und dabei beheizt. Übliche Transporteinrichtungen bestehen zum Beispiel aus einer umlaufenden Transportkette. Die Kettenglieder werden dabei zum Beispiel von Transportdornen gebildet, von denen jeder durch klemmenden Eingriff in den Mündungsabschnitt eines Vorformlinges einen Vorformling hält und auf seiner umlaufenden Bewegung entlang der Heizstrecke und durch die Heizkästen führt.

In der Regel ist die Heizvorrichtung modular aufgebaut, d.h. entlang der Heizstrecke sind mehrere solcher Heizkästen als Heizmodul angeordnet. Es kann sich dabei um jeweils gleiche Heizkästen handeln oder um Heizkästen unterschiedlicher Bauart.

Innerhalb der Heizkästen sind zum Beispiel Heizelemente angeordnet. Es werden im Stand der Technik bevorzugt Nahinfrarot-Strahler (NIR) als Heizelemente verwendet, zum Beispiel können in Längsrichtung eines Vorformlings mehrere Nahinfrarot-Strahler als Heizelemente übereinander angeordnet sein. Ein Beispiel für eine solche Heizvorrichtung und ein Beispiel für den typischen Aufbau eines vorstehend als Heizkasten bezeichneten Heizmoduls zeigt die EP 2 749 397 A1 oder auch die WO 2011/063784 A2.

Es ist im Stand der Technik bekannt, dass diese Heizvorrichtungen an eine Steuerungseinrichtung angeschlossen sind. Diese Steuerungseinrichtung ist dabei in der Regel so ausgelegt, dass die Vorformlinge innerhalb der Heizvorrichtung so erwärmt werden, dass sie die Heizvorrichtung mit einem gewünschten Temperaturprofil verlassen. Darunter ist zu verstehen, dass sowohl eine bestimmte Temperatur im Vorformling realisiert ist als auch ein bestimmter Temperaturverlauf in Längsrichtung des Vorformlinges und ggf. auch in Umfangsrichtung des Vorformlinges. Es ist im Stand der Technik auch bekannt, dass zum Beispiel zusätzlich zu den vorstehend genannten Heizelementen auch Einrichtungen zur Kühlung der Oberfläche der Vorformlinge vorgesehen sein können, zum Beispiel Einrichtungen zum gezielten Beaufschlagen der Vorformlingsoberfläche mit einer kühlenden Luftströmung. Auch diese zusätzlichen Einrichtungen zur Kühlung können in die genannte Steuerungseinrichtung der Heizvorrichtung eingebunden sein. Der Begriff der Steuereinrichtung und des Steuerverfahrens umfasst Einrichtungen und Verfahren, mit denen eine Steuerung im Sinne des englischen Begriffes "open-loop control" ausgeführt wird, mit denen eine Regelung im Sinne des englischen Begriffes "closed-loop control" ausgeführt wird, und Mischformen davon.

Um die Heizvorrichtung steuerungstechnisch so regeln und/oder steuern zu können, dass am Ausgang der Heizvorrichtung die Vorformlinge in der gewünschten Weise temperaturkonditioniert vorliegen, also die gewünschte Temperatur und das gewünschte Temperaturprofil aufweisen, ist es im Stand der Technik bekannt, ausgangsseitig der Heizvorrichtung zum Beispiel einen Messsensor anzuordnen, z.B. einen Pyrometer, der die Oberflächentemperatur an dem Messsensor vorbeilaufender Vorformlinge misst. Der Führungswert der Regelung wäre bei einer solchen Ausführungsform die Oberflächentemperatur der Vorformlinge. Dieser Messwert kann zum Beispiel mit einem Sollwert verglichen werden und die Regelung der Heizvorrichtung kann also auf eine Regelung auf einen Sollwert für die Oberflächentemperatur der Vorformlinge eingestellt sein.

Bei bekannten Heizvorrichtungen ist teilweise vorgesehen, dass bezüglich in Längsrichtung der Vorformlinge übereinander angeordneter Heizelemente eine Unterscheidung vorgenommen wird. Es wird z.B. für die übereinander angeordneten Heizelemente jeweils eine eigene Heizleistung definiert, die von der Steuerungseinrichtung geregelt und/oder gesteuert wird. Es kann z.B. eine Voreinstellung in der Steuerungseinrichtung dahingehend erfolgen, z.B. durch eine Bedienperson, ob und in welcher Weise auf einem unterschiedlichen Höhenniveau angeordnete Heizelemente unterschiedlich heizen sollen. Die Steuerungseinrichtung kann dafür z.B. einen höhenspezifischen Parameter bereitstellen. Weiterhin ist bekannt, dass ein übergeordneter Leistungsparameter eingestellt wird, der für alle Heizelemente Anwendung findet. Die tatsächliche, von der Steuerungseinrichtung vorgegebene Heizleistung einer Strahlerebene, also aller auf einem gleichen Höhenniveau angeordneten Heizelemente, ergibt sich dann durch Multiplikation beider Parameter. Durch die individuelle Einstellung der Heizleistung pro Heizelementebene ist ein bestimmtes Heizprofil einstellbar. So kann zum Beispiel die Heizleistung in jeder Ebene so eingestellt werden, dass bestimmte Bereiche des Vorformlinges stärker beheizt werden. Gleichzeitig kann die Heizleistung insgesamt eingestellt werden über den für alle Heizelemente gemeinsamen, übergeordneten Leistungsparameter. Die Regelung der Heizvorrichtung erfolgt dabei im Stand der Technik dadurch, dass der übergeordnete Leistungsparameter in Abhängigkeit vom Pyrometermesswert nachgestellt wird. Der Pyrometermesswert stellt die Führungsgröße der Regelung dar, also z.B. die Oberflächentemperatur der Vorformlinge. Der höhenspezifische Parameter wird im Stand der Technik nicht geregelt, sondern ergibt sich aus dem gewünschten Temperaturprofil in Achsrichtung des Vorformlings. Er wird in der Regel beim Einrichten bzw. beim Einfahren der Maschine eingestellt und bedarfsweise von einer Bedienperson geändert, z.B. bei einer Produktionsumstellung auf andere Vorformlinge.

Die bekannten Heizvorrichtungen und die bekannten Steuerungseinrichtungen und Steuerverfahren für diese Heizvorrichtungen zeigen gute Ergebnisse, wenn die Heizvorrichtung ihre Gleichgewichtstemperatur im thermodynamisch stabilen Gleichgewichtszustand erreicht hat und im Dauerbetrieb und in diesem Zustand betrieben wird. Dieser thermodynamisch stabile Gleichgewichtszustand liegt vor, wenn nach einer gewissen Betriebsdauer die die Heizvorrichtung bildenden Elemente wie Heizelemente, Reflektoren etc. eine Temperatur erreicht haben, die bei fortdauerndem Betrieb im Wesentlichen konstant bleibt. Ein solcher thermodynamisch stabiler Gleichgewichtszustand liegt hingegen noch nicht vor, wenn die Heizung in Betrieb genommen wird oder wenn die Heizung aus einem sogenannten Inline-Betrieb wieder in einen Produktionsbetrieb versetzt wird. Als "Inline-Betrieb" wird dabei ein Betriebszustand verstanden, in dem der reguläre Behälterherstellungsprozess und somit auch der reguläre Erwärmungsprozess unterbrochen ist, zum Beispiel aufgrund von Betriebsstörungen. Bei Betriebsstörungen wird in der Regel der Zulauf von Vorformlingen in die Heizvorrichtung unterbrochen und die Heizvorrichtung bei einem niedrigen Heizleistungswert weiterbetrieben. Erst bei länger andauernden Betriebsstörungen wird die Heizvorrichtung gänzlich ausgeschaltet. Heizvorrichtungen zeigen in solchen Startupphasen, also Betriebsphasen außerhalb des Dauerbetriebs, ein instationäres Abstrahl- und Aufheizverhalten. Dieses instationäre Verhalten resultiert im Wesentlichen aus zwei Effekten. Zum Startzeitpunkt der Heizvorrichtung sind die Bauelemente der Vorrichtung selber noch nicht auf ihrer endgültigen Betriebstemperatur angelangt. Deshalb liegen noch keine stabilen thermischen und geometrischen Verhältnisse vor. Die Wärmestrahlung, die auf die durch die Heizvorrichtung geführten Vorformlinge auftrifft, ist in der Startupphase bereits deshalb noch nicht in einem thermodynamischen Gleichgewicht, weil in der Heizvorrichtung angeordnete Reflektoren oder andere Bauteile noch nicht ihre Gleichgewichtstemperatur erreicht haben. Die Reflektoren oder andere Bauteile der Heizvorrichtung stellen aber Sekundärstrahler dar. Auch die Glaskolben der Strahler oder eventuell vorgesehene Filter haben gegebenenfalls noch nicht ihren Gleichgewichtszustand erreicht und es ergeben sich weitere Effekte auf die Strahlungsintensität, die auf die Vorformlinge einwirkt, zum Beispiel auch bezüglich des Wellenlängenspektrums der auf die Vorformlinge auftreffenden Strahlung.

Ein weiterer Aspekt ist, dass in der Startupphase der Heizvorrichtung zunächst keine Vorformlinge in die Heizvorrichtung einlaufen. Im Stand der Technik ist es üblich, Vorformlinge erst nach Erreichen einer bestimmten Heizvorrichtungstemperatur in die Heizvorrichtung einlaufen zu lassen. Mit dem Einlaufen der ersten Vorformlinge ändert sich das Verhältnis zwischen abstrahlenden und absorbierenden Flächen stetig.

In diesen Startupphasen der Heizvorrichtung werden also im Ergebnis die Vorformlinge unterschiedlich beheizt. Entsprechend weisen die aus den Vorformlingen hergestellten Behälter eine Streuung in ihren Eigenschaften auf.

Die in der Heizvorrichtung herrschende Temperatur wird im Stand der Technik zum Beispiel durch Temperatursensoren gemessen, die zum Beispiel in einem Reflektor der Heizvorrichtung angeordnet sein können. Eine solche Temperaturmessung kann zum Beispiel verwendet werden zur Feststellung, ob die Heizvorrichtung eine bestimmte Solltemperatur erreicht hat, ab der das Einlaufen der Vorformlinge in die Heizvorrichtung gestartet wird. Es ist auch möglich, mehrerer solcher Temperatursensoren vorzusehen.

Während also beim Betrieb bekannter Heizvorrichtungen im Dauerbetrieb, also z.B. nach Abschluss der Startupphase einer solchen Heizvorrichtung, zufriedenstellende Ergebnisse bei der Behälterqualität erreichbar sind, da die im Stand der Technik bekannten Steuerungseinrichtungen der Heizvorrichtungen ausreichend funktionieren, ergeben sich Probleme in der Behälterqualität vor dem Dauerbetrieb, nämlich vor Erreichen eines zumindest annähernd thermodynamisch stabilen Gleichgewichtszustandes. Grundsätzlich wäre es natürlich möglich, die Startupzeit der Heizvorrichtung so auszugestalten, dass mit guter Zuverlässigkeit ein annähernd thermodynamisch stabiler Gleichgewichtszustand erreicht ist, also zum Beispiel die Bauteile der Heizvorrichtung ihren thermischen Gleichgewichtszustand oder einen Zustand nahe ihres thermischen Gleichgewichtes erreicht haben, bevor begonnen wird, die Vorformlinge in die Heizvorrichtung einlaufen zu lassen. Dies würde aber auch bedeuten, dass vor Aufnahme der Behälterproduktion einige Zeit vergeht. Typische Startupzeiten liegen im Bereich von Minuten und können zum Beispiel 5 Minuten betragen. Für eine effektivere Ausnutzung der vorhandenen Maschinen und für eine effektivere Nutzung der Heizenergie ist aber eine möglichst frühe Produktionsaufnahme wünschenswert. Deshalb wird im Stand der Technik auch schon mit der Behälterproduktion begonnen, weit bevor die Heizvorrichtung ihren Dauerbetriebszustand erreicht hat, also noch innerhalb der Startupphase.

Es ist hierbei bekannt, dass in dieser Startupphase die Heizungsvorrichtung anders als im Dauerbetrieb geregelt bzw. gesteuert wird. Die vorstehend beschriebene Regelung anhand einer Messung der Temperatur der Vorformlinge und der Übergang in den Dauerbetriebszustand ist ohnehin erst dann möglich, wenn die ersten Vorformlinge die Heizvorrichtung verlassen, da erst zu diesem Zeitpunkt ein Führungswert durch Messung der Vorformlingstemperatur generiert werden kann. Es ist deshalb bekannt, dass zum Beispiel nach Erreichen einer ersten Solltemperatur in der Heizvorrichtung die Heizvorrichtung in anderer Art betrieben wird als zu einem Zeitpunkt, zu dem eine erste Temperaturmessung der Vorformlinge erfolgt. Ab dann greift z.B. die vorstehend beschriebene Regelung der Heizvorrichtung im Dauerbetrieb. Vorher wird die Heizvorrichtung nach einem anderen Verfahren betrieben.

Bevor die Heizvorrichtung ihren thermodynamisch stabilen Gleichgewichtszustand bei voller Produktionsleistung erreicht wird tendenziell zu wenig Wärmeenergie in die Vorformlinge eingebracht. Der Grund besteht darin, dass erwärmte Bauteile der Vorrichtung als Sekundärstrahler wirken und mit zunehmender Temperatur mehr langwellige Strahlung abgeben, die besonders gut zum Beispiel von PET absorbiert wird. Vor Erreichen des thermodynamisch stabilen Gleichgewichtszustandes ist dieser langwellige Strahlenanteil durch Sekundärstrahler niedriger. Aus diesem Grunde ist es im Stand der Technik bekannt, dass bei Beladung der Heizvorrichtung mit Vorformlingen vor Erreichen des Dauerbetriebszustandes und somit auch deutlich vor Erreichen des thermodynamisch stabilen Gleichgewichtszustandes die Gesamtheizleistung der Heizvorrichtung auf einen höheren Wert eingestellt wird, als dies einem Basiswert für den Dauerbetrieb entspricht. Dieser höhere Heizleistungswert für die Heizvorrichtung wird zunächst konstant gehalten, bis die Heizvorrichtung vollständig beladen ist. Erst danach greift die Regelung für den Dauerbetrieb wie eingangs beschrieben ein, da erst dann Temperaturmessungen an Vorformlingen möglich sind.

Die in der Startupphase der Heizvorrichtung vorgegebene höhere Heizleistung wird zum Beispiel einer sogenannten Trendkurve entnommen, die zum Beispiel empirisch bestimmte Zusammenhänge zwischen der Leistung der Heizvorrichtung und der Heizvorrichtungstemperatur enthält. Die Steuerung der Heizvorrichtung bzw. der Heizleistung der Heizvorrichtung in dieser Startupphase erfolgt also anhand eines festen Leistungswertes aus einer solchen vorgegebenen Trendkurve, wobei es im Stand der Technik auch bekannt ist, eine gemessene Umgebungstemperatur zu berücksichtigen, indem die empirisch motivierte Trendkurve je nach erfasster Umgebungstemperatur verschoben wird. Zusammengefasst ist es im Stand der Technik also bekannt, dass vor Erreichen des Dauerbetriebszustandes der Heizvorrichtung die Heizvorrichtung nicht anhand zum Beispiel einer Temperaturmessung am Vorformling geregelt wird, sondern dass die Heizelemente mit zeitlich konstanter Leistung betrieben werden, wobei der einzustellende Leistungswert einer Trendkurve entnommen wird.

Die vorstehend beschriebenen Heizvorrichtungen des Standes der Technik werden also zunächst gestartet und die Heizelemente werden mit einer bestimmten, voreingestellten Startleistung betrieben. Bei Erreichen einer bestimmten ersten Temperatur in der Heizvorrichtung laufen die ersten Vorformlinge in die Heizvorrichtung hinein und die Heizvorrichtung bzw. die Heizelemente der Heizvorrichtung werden mit einem vorgegebenen Leistungswert betrieben. Die Heizvorrichtung wird gemäß dieser konstanten Wertvorgabe gesteuert. Erst ab Erreichen eines bestimmten vorgegebenen Ereignisses greift die Regelung der Heizvorrichtung für den Dauerbetrieb. Dieses vorgegebene Ereignis kann zum Beispiel das Erfassen erster Oberflächentemperaturen von Vorformlingen sein.

In der vorliegenden Anmeldung und insbesondere in den Ansprüchen wird von einem ersten und einem zweiten Betriebszustand der Heizvorrichtung gesprochen. Der zweite Betriebszustand soll dabei der Betriebszustand der Heizvorrichtung sein, in dem ein thermodynamisch stabiler Gleichgewichtszustand noch nicht erreicht ist, das heißt die Heizstrahler und die sonstigen Elemente der Heizvorrichtung haben ihren thermodynamischen Gleichgewichtszustand noch erreicht. In diesem zweiten Betriebszustand streben die Heizstrahler und die übrigen Elemente noch dem thermischen Gleichgewichtszustand entgegen. Bezogen auf typische Zykluszeiten eines Umformprozesses von der thermischen Konditionierung bis zum fertigen Behälter verändern sich deren Temperaturen und deren Strahlverhalten noch in Richtung auf einen dynamischen Gleichgewichtszustand. Typische Zykluszeiten liegen im Bereich von 10 Sekunden, und diese Änderungen sind in diesem Zeitfenster z.B. bezogen auf die Heizvorrichtungstemperatur im Bereich von einigen Grad Celsius. Im davon zu unterscheidenden ersten Betriebszustand erfolgt im Stand der Technik eine Regelung der Heizleistung nach einem von einem Messsensor erfassten Führungswert $F_{IST}$ innerhalb eines Regelkreises.

Nachteilig bei der vorstehend beschriebenen Steuerung der Heizvorrichtung im Startupbetrieb ist, dass die aus der Heizvorrichtung auslaufenden Vorformlinge noch keine sehr einheitliche Temperatur und noch kein sehr einheitliches Temperaturprofil haben können, da die feste Einstellung eines Leistungswertes für die Heizelemente lediglich ein geeigneter Mittelwert für die Startupphase darstellen kann. Die aus diesen Vorformlingen hergestellten Behälter weisen daher noch eine relativ große Streuung in ihren Eigenschaften auf.

Die FR 2 965 746 A1 offenbart ein Verfahren gemäß dem Oberbegriff des Anspruchs 1.

Die vorliegende Erfindung soll an dieser Stelle eine Verbesserung herbeiführen und die Qualität der Temperaturkonditionierung der Vorformlinge und somit auch die Qualität der daraus hergestellten Behälter während eines Startupbetriebes einer Heizvorrichtung verbessern, die also vor Erreichen des Dauerbetriebes und auch vor Erreichen eines thermodynamischen Gleichgewichtszustandes der Heizvorrichtung hergestellt werden.

Diese Aufgabe wird gelöst durch ein Verfahren nach Anspruch 1, durch eine Heizvorrichtung nach Anspruch 8 und durch eine Maschine nach Anspruch 9.

Erfindungsgemäß ist vorgesehen, dass im zweiten Betriebszustand der Heizvorrichtung kein fester Wert für die Heizleistung vorgegeben werden. Vielmehr soll die Steuerungseinrichtung im zweiten Betriebszustand die Heizvorrichtung mit einem sich zeitlich verändernden Heizleistungswert betreiben. Dabei ist es bevorzugt, dass sich der sich zeitlich verändernde Heizleistungswert auf den im Dauerbetrieb anzuwendenden Basisheizleistungswert hin entwickelt, bevorzugt erreicht er diesen Wert zumindest näherungsweise beim Übergang in den Dauerbetrieb, während er vorher höhere Heizleistungswerte annimmt. Im Dauerbetrieb erfolgt im Stand der Technik eine Regelung um einen Basisheizleistungswert herum. Im Dauerbetrieb geht es nämlich allgemein gesprochen darum, eine stabilisierende Regelung vorzusehen nach einem Führungswert, z.B. nach der Vorformlingstemperatur, in einem ansonsten aber sich jedenfalls annähernd in einem Gleichgewichtszustand befindlichen thermodynamischen System. Die von der Regelung vorgegebenen Heizleistungswerte werden also im Ergebnis um einen Basisheizleistungswert herum liegen. Daher ist es vorteilhaft, wenn die Steuerungseinrichtung im zweiten Betriebszustand die Heizleistungswerte in Richtung auf diesen Basisheizleistungswert sich entwickelnd vorgibt. Gegenüber dem ersten Betriebszustand ist der zweite Betriebszustand keine stabilisierende Regelung, sondern eine kompensierende Steuerung und/oder Regelung eines Systems außerhalb eines annähernden Gleichgewichts zur Berücksichtigung der Nicht-Gleichgewichts-Effekte. Bevorzugt kann z.B. vorgesehen sein, dass im zweiten Betriebszustand dem Basisheizleistungswert des Dauerbetriebes ein sich zeitlich veränderlicher Kompensationswert aufaddiert wird, der in Richtung auf den Übergang zum Dauerbetrieb von zunächst höheren Werten gegen Null geht.

In ersten möglichen Ausführungsformen kann z.B. die Steuerungseinrichtung im zweiten Betriebszustand der Heizvorrichtung eine Regelung oder Steuerung durchführen anhand eines Führungswertes. Ein solcher Führungswert kann zum Beispiel die Ist-Temperatur der Heizvorrichtung sein oder auch die Zeit. Es ist zum Beispiel auch möglich, die Leistungswerte sich in Abhängigkeit von der Temperatur in der Heizvorrichtung ändernd vorzugeben. In der Steuerungseinrichtung kann also zum Beispiel eine Kennlinie hinterlegt sein, nach der die Heizleistung gesteuert wird, wobei diese Kennlinie zum Beispiel einen funktionalen Zusammenhang zwischen der Temperatur der Heizvorrichtung und einzustellenden Leistungswerten darstellt oder zum Beispiel einen funktionalen Zusammenhang zwischen einer Zeit und einzustellenden Leistungswerten. Diese Kennlinie kann zum Beispiel in Abhängigkeit von einer gemessenen Umgebungstemperatur vorgegeben sein, um Einflüsse der Umgebungstemperatur zu berücksichtigen. Im Unterschied zum Stand der Technik ist es mit der vorliegenden Erfindung möglich, in der Startupphase der Heizvorrichtung die sich ändernden Aufheizbedingungen in Folge der zunehmenden Annäherung an den thermodynamischen Gleichgewichtszustand zu berücksichtigen, indem im Laufe der Startupphase die Heizleistungswerte gesteuert bzw. geregelt geändert werden. Dies kann zum Beispiel durch Hinterlegung geeigneter, empirisch ermittelter Kennlinien erfolgen. Weitere Alternativen und Weiterbildungen der Erfindung sind in den Unteransprüchen angegeben.

Mit Vorteil wird zum Beispiel vorgeschlagen, dass in der Heizvorrichtung ein Temperatursensor angeordnet wird. Dieser Temperatursensor dient der Erfassung einer Temperatur der Heizvorrichtung und dieser Temperatursensor kann zum Beispiel wie aus dem Stand der Technik grundsätzlich bekannt angeordnet und ausgebildet sein. Erfindungsgemäß ist vorgesehen, dass der Übergang in den ersten Betriebszustand, z.B. der Übergang in den Dauerbetriebszustand der Heizvorrichtung, also das Verlassen des zweiten Betriebszustandes, z.B. des Startupbetriebszustandes, ab Erreichen einer vorgegebenen Heizvorrichtungstemperatur erfolgt. Dieser Temperatursensor kann auch Temperaturmesswerte liefern, um mit diesen als Führungsgröße eine Steuerung bzw. Regelung des Betriebes der Heizvorrichtung in dessen zweitem Betriebszustand auszuführen.

Die Begriffe Dauerbetriebszustand und erster Betriebszustand und die Begriffe Startupzustand/Startupphase und zweiter Betriebszustand synonym verwendet.

Weiterhin wird mit Vorteil vorgeschlagen, dass die vorstehend geschilderte Steuerung bzw. Regelung der Heizvorrichtung in der Startupphase vor Erreichen des Dauerbetriebszustandes erst einsetzt, wenn eine Mindesttemperatur in der Heizvorrichtung erreicht ist. Erst zu diesem Zeitpunkt sollten Vorformlinge in die Heizvorrichtung einlaufen. Es kann zum Beispiel vorgesehen sein, dass in einer ersten Phase der Startupphase die Heizelemente mit hoher Leistung betrieben werden, um schnell eine Erwärmung der Heizvorrichtung zu erreichen. Bei Erreichen einer ersten Temperatur kann dann auf die Regelung bzw. Steuerung in der Startupphase zurückgegriffen werden, und bei Erreichen einer zweiten Temperatur oder bei Erfassung erster Messergebnisse an Vorformlingen kann dann die bekannte Regelung im Dauerbetriebszustand der Heizvorrichtung greifen.

Es wurde vorstehend erläutert, dass die Erfindung zum Beispiel dadurch realisiert sein kann, dass Kennlinien für die Startupphase vorgegeben werden. Es ist allerdings mit Vorteil auch möglich, dass die Steuerungseinrichtung Messergebnisse aus Messungen an Vorformlingen oder aus Messungen an daraus hergestellten Behältern verwendet. Diese Messwerte werden zum Beispiel in einem ersten, zeitlich früheren Startupvorgang gewonnen, z.B. durch Messung an während des früheren Startupvorgangs temperaturkonditionierter Vorformlingen oder daraus hergestellter Behälter, und für die Steuerung bzw. Regelung in einem zweiten, zeitlich späteren Startupvorgang verwendet, um die Steuerung bzw. Regelung der Startupphase zu modifizieren im Sinne eines Verbesserns oder gar Lernens. Auf diese Weise ist es möglich, die Qualität der Beheizung der Vorformlinge sukzessive von Startupvorgang zu Startupvorgang zu verbessern.

Die Messwerte, die für die Modifizierung der Steuerung bzw. der Regelung der Startupphase verwendet werden, können zum Beispiel Temperaturmessungen am Vorformling sein. Es kann zum Beispiel wie im Stand der Technik bekannt eine Oberflächentemperatur des Vorformlinges durch einen Pyrometer gemessen werden. Es ist aber auch möglich, Messungen an Behältern vorzunehmen, zum Beispiel könnten Wandstärken von Behältern gemessen werden. Generell geht es um die Messung von Werten am Vorformling oder am Behälter, die für die in den Vorformling eingetragene Heizleistung indikativ sind.

Die vorstehend geschilderte sich verbessernde bzw. lernende Steuerungseinrichtung kann zum Beispiel dadurch realisiert sein, dass die Ergebnisse der Messungen einem neuronalen Netz zugeführt werden. Insbesondere sind für die vorstehende Aufgabe einschichtige neuronale Netze geeignet und hier insbesondere sogenannte GeneralRegression-Neural-Networks, auch als GRNN bezeichnet.

Die Steuerungseinrichtung ist dabei mit Vorteil so ausgebildet, dass die Steuerung bzw. Regelung in der Startupphase der Heizvorrichtung als Störgröße der Regelung der Heizvorrichtung im Dauerbetriebszustand implementiert wird. Auf diese Weise lassen sich aus dem Stand der Technik bekannte Regelungsstrukturen und Steuereinrichtungen weiter verwenden, und diese sind im Sinne der Erfindung zu ergänzen durch eine Störgröße, wobei erfindungsgemäß bevorzugt vorgesehen ist, dass diese Ergänzung als selbstlernende Störgrößenkompensation ausgeführt ist. Insbesondere könnte den Stellsignalen der Steuerungseinrichtung für den Dauerbetriebszustand der Heizvorrichtung in der Startupphase der Heizvorrichtung ein Kompensationssignal aufaddiert werden. Bei Erreichen des Dauerbetriebszustandes der Heizvorrichtung könnte zum Beispiel die Störgröße bzw. die Störgrößenzuschaltung entfallen.

Weitere Vorteile, Merkmale und Details der Erfindung ergeben sich aus den im Folgenden beschriebenen Ausführungsbeispielen unter Bezugnahme auf schematische Zeichnungen. Es zeigen:

Fig. 1      eine stark schematisierte Darstellung einer Umformmaschine bzw. einer Maschine zum Formen von Behältern aus Vorformlingen,

Fig. 2      eine schematisierte Darstellung eines Heizkastens einer Heizvorrichtung,

Fig. 3      eine Prinzipdarstellung eines temperaturkonditionierten Vorformlings mit Temperaturprofilierung,

Fig. 4      eine schematische Darstellung einer möglichen Steuerungsarchitektur einer Umformmaschine,

Fig. 5      ein Regelungsschema für die Regelung einer Heizvorrichtung,

Fig. 6      ein alternatives Regelungsschema für die Regelung einer Heizvorrichtung,

Fig. 7      eine schematische Darstellung eines Neurons als Bestandteil eines neuronalen Netzes,

Fig. 8      eine schematische Darstellung zu einer selbstlernenden Kompensation einer Störgröße,

Fig. 9      eine schematische Darstellung eines erfindungsgemäßen Regelungskonzeptes mit neuronalem Netz,

Fig. 10     eine graphische Darstellung experimenteller Werte zu Vorformlingseigenschaften bei erfindungsgemäßer Heizvorrichtungsregelung.

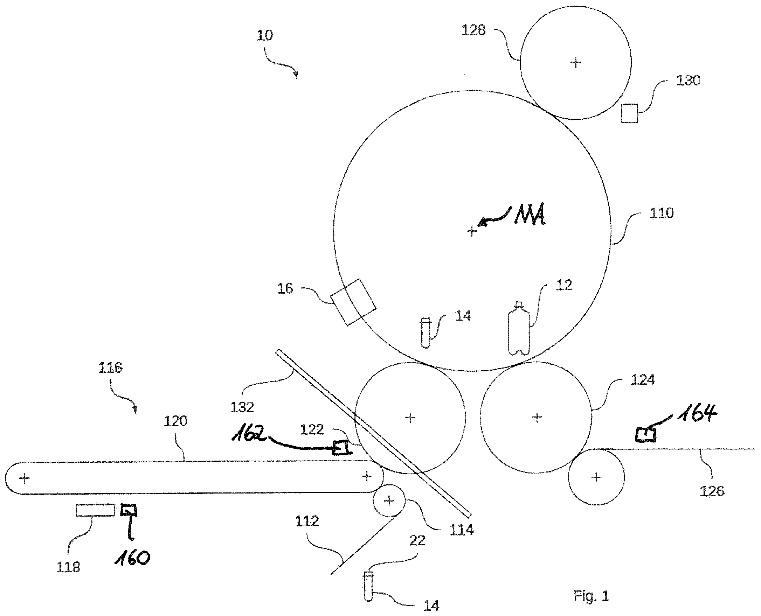

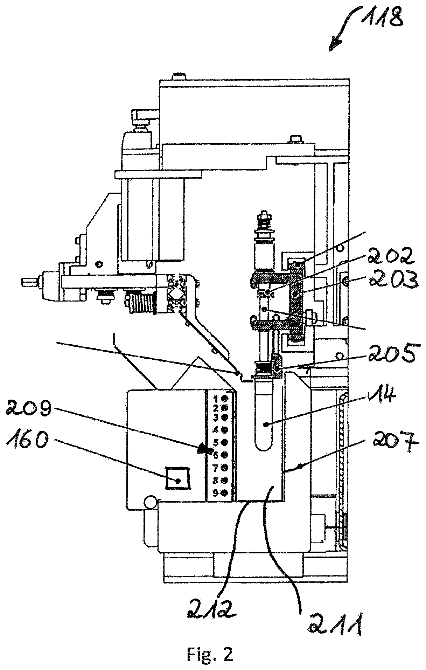

Der prinzipiell aus dem Stand der Technik bekannte Aufbau einer Umformmaschine 10 ist in Figur 1 dargestellt. Die Darstellung zeigt die bevorzugte Ausbildung einer solchen Umformmaschine 10 in der Art einer Rotationsmaschine mit einem mehrere Umformstationen 16 tragenden, rotierenden Arbeitsrad 110. Zur zeichnerischen Vereinfachung ist allerdings lediglich eine solche Umformstation 16 dargestellt. Von einer Zuführeinrichtung 112 werden schematisch dargestellte Vorformlinge 14, die auch als Preforms bezeichnet werden, unter Verwendung eines Übergaberades 114 kontinuierlich einer Heizvorrichtung 116 zugeführt. Im Bereich der Heizvorrichtung 116, die auch als Ofen bezeichnet wird und in der die Vorformlinge 14 entlang einer Heizstrecke transportiert und dabei thermisch konditioniert werden, können die Vorformlinge 14 anwendungsabhängig beispielsweise mit ihren Mündungsabschnitten 22 in lotrechter Richtung nach oben oder in lotrechter Richtung nach unten transportiert werden. Die Heizvorrichtung 116 ist beispielsweise mit Heizeinrichtungen 118 ausgestattet, die entlang einer Transporteinrichtung 120 zur Ausbildung der Heizstrecke angeordnet sind. Als Transporteinrichtung 120 kann beispielsweise eine umlaufende Kette mit Transportdornen zur Halterung der Vorformlinge 14 verwendet werden. Als Heizeinrichtungen 118 eignen sich beispielsweise Heizkästen mit IR-Strahlern oder Licht emittierenden Dioden oder NIR-Strahlern. Da solche Heizvorrichtungen in vielfältiger Art im Stand der Technik bekannt sind, und da die konstruktiven Einzelheiten der Heizeinrichtungen für die vorliegende Erfindung nicht wesentlich sind, kann auf eine über die Beschreibung zur Figur 2 hinausgehende, detailliertere Beschreibung verzichtet und auf den Stand der Technik verwiesen werden, insbesondere auf den Stand der Technik zu Heizvorrichtungen von Blas- und von Streckblasmaschinen und zu Heizvorrichtungen von Form- und Füllmaschinen, die allesamt von dem Begriff Umformmaschinen umfasst sind.

Nach einer ausreichenden Temperaturkonditionierung werden die Vorformlinge 14 von einem Übergaberad 122 zu einem rotationsfähig angeordneten, d.h. um eine vertikale Maschinenachse MA umlaufend antreibbaren Arbeitsrad 110 bzw. an Umformstationen 16 übergeben, die an dem Arbeitsrad 110 umfangsverteilt angeordnet sind. Das Arbeitsrad 110 ist mit einer Mehrzahl solcher Umformstationen 16 ausgestattet, in deren Bereich sowohl eine Umformung der Vorformlinge 14 in die schematisch dargestellten Behälter 12 als auch eine Befüllung der Behälter 12 mit dem vorgesehenen Füllgut erfolgt. Das Formen jedes Behälters 12 erfolgt hierbei zeitgleich mit der Befüllung, wobei das Füllgut als Druckmedium beim Formen dient. Bei Blasmaschinen erfolgt hingegen keine Befüllung auf diesem Arbeitsrad 110, sondern zu einem späteren Zeitpunkt auf einem Füllerrad mit Füllstationen.

Nach dem Formen und Füllen werden die fertig geformten und gefüllten Behälter 12 von einem Entnahmerad 124 vom Arbeitsrad 110 entnommen, weitertransportiert und einer Ausgabestrecke 126 zugeführt. Das Arbeitsrad 110 läuft im Produktionsbetrieb kontinuierlich mit einer gewünschten Umlaufgeschwindigkeit um. Während eines Umlaufs erfolgt das Einsetzen eines Vorformlings 14 in eine Umformstation 16, die Expansion des Vorformlings 14 zu einem Behälter 12 inklusive Füllung mit einem Füllgut und ggf. inkl.

Reckung, falls eine Reckstange vorgesehen ist, und die Entnahme des Behälters 12 aus der Umformstation 16.

Gemäß der Ausführungsform in Figur 1 ist weiterhin vorgesehen, dem Arbeitsrad 110 über eine Eingabeeinrichtung 128 schematisch dargestellte Verschlusskappen 130 zuzuführen. Hierdurch ist es möglich, auf dem Arbeitsrad 110 auch bereits ein Verschließen der Behälter 12 durchzuführen und unter Verwendung des Entnahmerades 124 fertig geformte, gefüllte und verschlossene Behälter 12 zu handhaben.

Als Material für die Vorformlinge 14 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 14 sind an die Größe, das Gewicht und/oder an die Gestaltung der herzustellenden Behälter 12 angepasst.

Im Bereich der Heizvorrichtung 116 sind typischerweise eine Vielzahl von elektrischen und elektronischen Bauteilen angeordnet. Darüber hinaus sind die Heizeinrichtungen 118 mit feuchtigkeitsempfindlichen Reflektoren versehen. Da im Bereich des Arbeitsrades 110 unter Verwendung des flüssigen Füllgutes eine Befüllung und Formung der Behälter 12 erfolgt, sollte bevorzugt zur Vermeidung elektrischer Probleme dafür gesorgt werden, dass ein unbeabsichtigter Eintrag von Feuchtigkeit in den Bereich der Heizvorrichtung 116 vermieden wird. Dies kann beispielsweise durch eine Abschotteinrichtung 132 erfolgen, die zumindest einen Spritzschutz bietet. Darüber hinaus ist es auch möglich, im Bereich des Übergaberades 122 verwendete Transportelemente für die Vorformlinge 14 geeignet zu temperieren oder mit Druckgasstößen derart zu beaufschlagen, dass anhaftende Feuchtigkeit nicht in den Bereich der Heizvorrichtung 116 gelangen kann.

Eine Handhabung der Vorformlinge 14 und/oder der Behälter 12 erfolgt vorzugsweise unter Verwendung von Zangen und/oder den Mündungsabschnitt 22 wenigstens bereichsweise von innen oder von außen mit einer Haltekraft beaufschlagenden Klemm- oder Steckdornen. Solche Handhabungsmittel sind ebenfalls aus dem Stand der Technik hinlänglich bekannt.

Die Umformmaschine 10 ist zum Zwecke ihrer Steuerung bzw. zum Zwecke ihrer Regelung mit Messsensoren ausgestattet. So ist es zum Beispiel üblich, dass in der Heizvorrichtung 116 ein Temperatursensor 160 angeordnet wird, um eine Temperatur der Heizvorrichtung 116 messen zu können. Weiterhin ist es im Stand der Technik bekannt, dass auslaufseitig der im Uhrzeigersinn umlaufenden Transporteinrichtung 120 ein Temperatursensor 162 angeordnet ist, der zum Beispiel als Pyrometer ausgebildet ist und der zum Beispiel an daran vorbeilaufenden temperaturkonditionierten Vorformlingen 14 eine Oberflächentemperatur erfasst. Schließlich ist es im Stand der Technik auch bekannt, mit Messsensoren Messungen an fertigen Behältern 12 vorzunehmen. So kann zum Beispiel an der Ausgabestrecke 126 ein Wanddickenmesssensor 164 angeordnet sein, um die Wanddicke eines daran vorbeigeführten Behälters zu erfassen. Die vorgenannten Sensoren können dabei auch aus mehreren höhenversetzt angeordneten Sensoren ausgebildet sein, um zum Beispiel entlang der Vorformlingslängsachse eine Temperaturmessung durchzuführen oder um zum Beispiel entlang der Behälterlängsachse eine Wanddickenmessung auszuführen. Auch in der Heizvorrichtung 116 können mehrere Temperatursensoren 160 angeordnet sein.

Die in Figur 1 exemplarisch dargestellte Heizeinrichtung 118 könnte zum Beispiel wie in Figur 2 detaillierter in einer schematischen Schnittansicht gezeigt aussehen. Solche Heizeinrichtungen werden auch als Heizkästen bezeichnet. In der Regel sind mehrere dieser Heizkästen 118 nebeneinanderstehend entlang der Heizstrecke angeordnet zur Ausbildung eines Heiztunnels, durch den die Vorformlinge 14 hindurchgeführt werden.

Der in Figur 2 in einer schematischen Schnittansicht dargestellte Heizkasten 118 weist mehrere Nahinfrarot-Strahler 209 auf, im dargestellten Ausführungsbeispiel sind neun Nahinfrarot-Strahler 209 in vertikaler Richtung übereinander angeordnet und jeder dieser Nahinfrarot-Strahler 209 definiert eine Heizebene. Diese NIR-Strahler 209 können bedarfsweise alle bei gleicher Leistung betrieben werden oder auch einzeln oder zu mehreren gruppiert bei unterschiedlichen Leistungen. Je nach axialer Erstreckung des Vorformlinges 14 können in vertikaler Richtung unten liegende Strahlerebenen auch abgeschaltet sein. Zur Erzielung eines Temperaturprofiles in den Vorformlingen 14 ist in der Regel erforderlich, dass Nahinfrarot-Strahler 209 auf unterschiedlichen Strahlerebenen mit unterschiedlicher Heizleistung betrieben werden.

Den Nahinfrarot-Strahlern 209 gegenüberliegend ist ein Gegenreflektor 207 angeordnet, der darauf auftreffende Heizstrahlung zurück in Richtung auf den Vorformling 14 und somit zurück in den Heiztunnel 211 reflektiert. Der Heiztunnel 211 ist nach unten abgeschlossen durch einen Bodenreflektor 212. Der Vorformling 14 ist mündungsseitig durch eine Stützringabschirmung 205 gegen Heizstrahlung geschützt, da der Mündungsbereich mit daran ausgebildetem Gewinde vor unnötiger Erwärmung geschützt werden soll. Die Stützringabschirmung 205 ist dabei an der Handhabungseinrichtung 203 angeordnet, die wie zu Figur 1 erläutert Teil einer umlaufenden Kette sein kann. Die Handhabungseinrichtung 203 weist weiterhin einen Klemmdorn 202 auf, der klemmend in den Mündungsabschnitt des Vorformlinges 14 eingreift. Solche Klemmdorne 202 und solche Handhabungseinrichtungen 203 sind aus dem Stand der Technik hinlänglich bekannt und bedürfen keiner weiteren Erläuterung. Auch der grundsätzliche Aufbau dieses vorstehend beschriebenen Heizkastens 118 ist aus dem Stand der Technik bekannt.

Der in Figur 1 prinzipienhaft dargestellte Temperatursensor 160 ist im Heizkasten 118 der Figur 2 ebenfalls dargestellt, wobei dieser Temperatursensor 160 in der Regel hinter einem Reflektor angeordnet wird, zum Beispiel hinter dem Rückreflektor 207. Dieser Temperatursensor 160 erfasst eine Temperatur des Heizkastens 118. Grundsätzlich wäre es auch möglich, eine Temperatur innerhalb des Heiztunnels 211 zu erfassen oder eine Temperaturmessung am Vorformling 14 innerhalb des Heiztunnels 211 vorzunehmen.

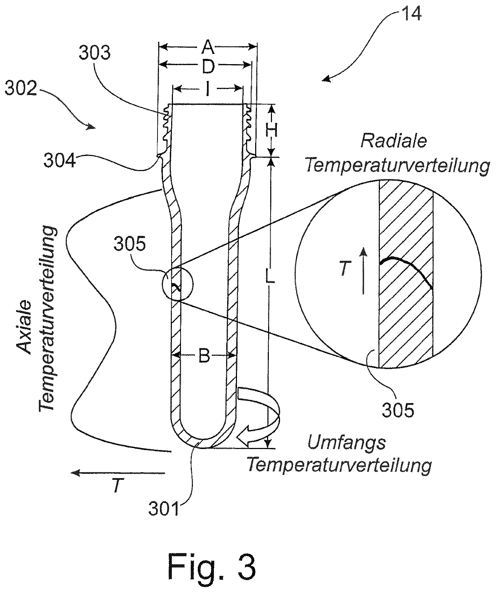

Figur 3 zeigt in einer Schnittansicht einen typischen Vorformling 14 mit einem geschlossenen Bodenbereich 301 und einem geöffneten Mündungsabschnitt 302. Im Bereich des Mündungsabschnittes 302 ist ein Außengewinde 303 sowie ein Stützring 304 ausgeformt. Nach erfolgter Temperaturkonditionierung ergibt sich in dem Vorformling 14 eine bestimmte Temperaturverteilung. So kann zum Beispiel durch eine entsprechende Beheizung in axialer Richtung des Vorformlinges 14 ein Temperaturprofil erzeugt werden, wie dies linksseitig des Vorformlinges 14 dargestellt ist. Es ist dort zu erkennen, dass im Bodenbereich und in einem Bereich unterhalb des Stützringes eine höhere Temperatur realisiert ist als in einem dazwischenliegenden Bereich. Es ist aber auch möglich, den Vorformling in axialer Richtung homogen aufzuheizen. Aus dem vergrößerten Abschnitt des Wandbereiches 305 ist ersichtlich, dass auch innerhalb der Vorformlingswand ein Temperaturverlauf einstellbar ist. Dies ist unter anderem dadurch bedingt, dass die Absorption der Heizstrahlung radial außen zu einer stärkeren Erwärmung führt, als radial innen. Temperaturunterschiede in der Vorformlingswand heben sich zwar mit der Zeit durch thermische Ausgleichsprozesse auf. Diese Temperaturausgleichsprozesse sind allerdings in den typischerweise aus PET bestehenden Vorformlingen relativ langsam.

Zusätzlich kann der Vorformlinge 14 auch in Umfangsrichtung mit einem Temperaturprofil versehen werden. Dies ist zum Beispiel bekannt für Vorformlinge, die nachfolgend in unrunde Behälter umgeformt werden sollen, zum Beispiel in ovale Behälter.

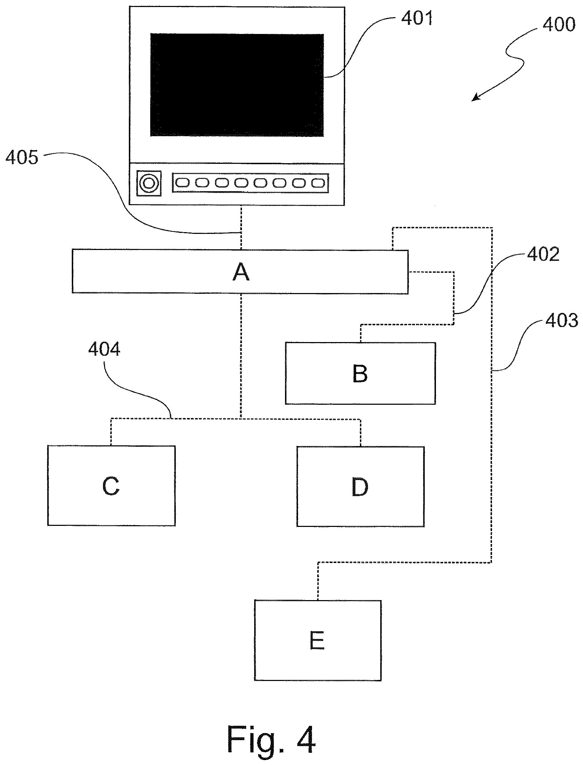

Figur 4 zeigt die schematische Darstellung einer möglichen modularen Steuerungsarchitektur einer Steuereinrichtung 400 für eine Umformmaschine 10. Mit dem Buchstaben A ist eine Mastersteuerung bezeichnet, Buchstabe B bezeichnet eine Steuereinrichtung für die Steuerung bzw. Regelung einer Heizvorrichtung, Buchstabe C bezeichnet eine Steuerung für den Antrieb zum Beispiel des Arbeitsrades 110, Buchstabe D bezeichnet Sicherheitseinrichtungen, wie zum Beispiel Notstop-Schalter, und Buchstabe E bezeichnet zum Beispiel eine Steuerungseinrichtung für den Umformprozess, also zum Beispiel für den möglichen Antrieb einer Reckstange, für Schaltventile zum Zu- oder Abschalten eines Umformfluides etc.. Auf einem Display 401 können steuerungsrelevante Daten angezeigt werden und von der Mastersteuerung wird über eine Datenleitung 405 das Display 401 mit darzustellenden Werten versorgt. Das Display 401 kann auch als Eingabeeinheit fungieren und über diese Eingabeeinheit eingegebene Werte können über die Verbindungsleitung 405 an die Mastersteuerung A übergeben werden. Die weiteren Datenleitungen 402, 403 und 404 und Datenleitung 405 können zum Beispiel als Datenbus ausgeführt sein und dienen zum Beispiel der Übertragung von Daten zwischen der Mastersteuerung A und den weiteren Steuermodulen oder zwischen den Steuermodulen untereinander.

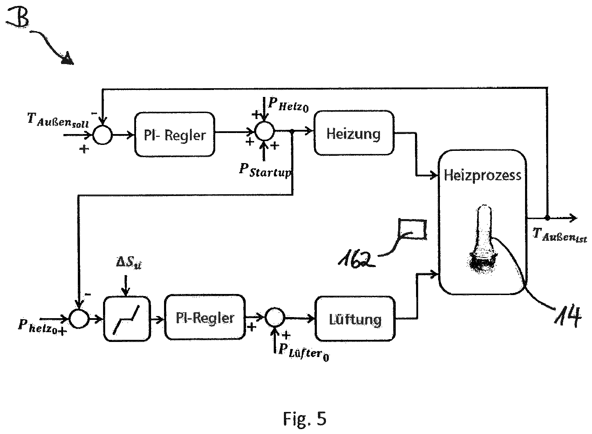

Figur 5 zeigt den schematischen Aufbau einer Steuereinrichtung B für die Heizungsregelung, wobei als Führungswert die Oberflächentemperatur $T_{Außen}$ eines Vorformlinges gewählt ist. Die von dieser dargestellten Regelung geregelte Heizvorrichtung arbeitet mit Heizeinrichtungen und mit Kühleinrichtungen in Form eines Lüfters. Die Regelung erhält als Arbeitspunkte eine Startheizleistung $P_{Heiz0}$ und eine Startlüfterleistung $P_{Lüfter0}$, da vorliegend zusätzlich zu Heizstrahlern eine Kühlung der Vorformlingsoberfläche vorgesehen ist. Die Regelung der Heizung soll dabei anhand der Messung einer Oberflächentemperatur der Vorformlinge 14 erfolgen, und zu diesem Zwecke ist wie zu Figur 1 erläutert am Ende der Heizstrecke ein Pyrometer 162 angeordnet. Anhand der mit dem Pyrometer 162 gemessenen Oberflächentemperatur $T_{Außen,IST}$ der Vorformlinge 14 führt die Regelung die Heizleistung nach. Weiterhin kann vorgesehen sein, dass eine Umgebungstemperatur erfasst wird und auch diese Umgebungstemperatur in die Regelung der Heizvorrichtung einfließt. Es ist im dargestellten Ausführungsbeispiel vorgesehen, dass ein Absinken der Heizleistung erfasst wird. Um ein zu starkes Absinken der Heizleistung zu verhindern wird bei Unterschreiten der Leistung $\Delta S_u$, die Leistung der Oberflächenkühlung durch die Lüftung verändert. Bei Absinken der Heizleistung wird zum Beispiel die Leistung der Oberflächenkühlung so lange erhöht, bis der Heizungsregler ein Absinken der Oberflächentemperatur der Vorformlinge feststellt und die Heizleistung wieder erhöht.

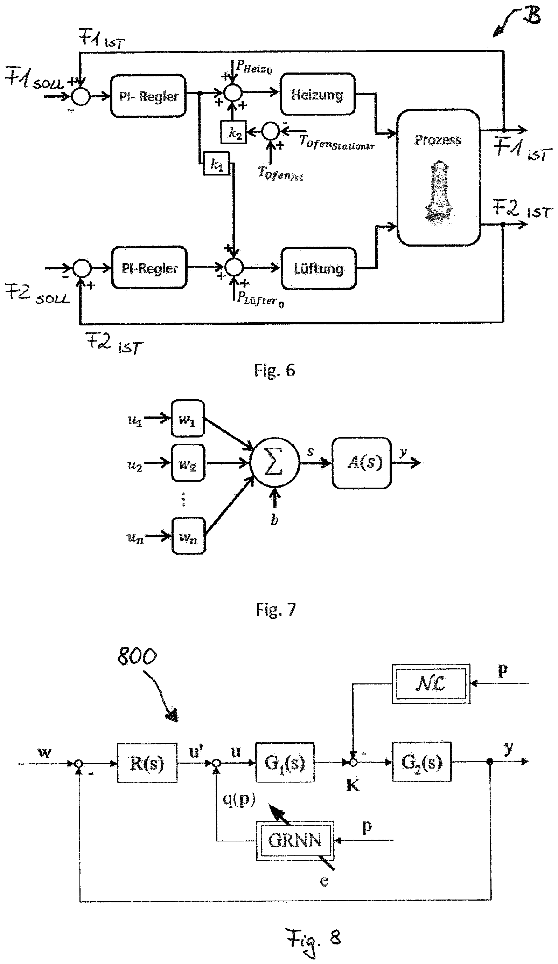

Figur 6 zeigt schematisch eine Steuerungseinrichtung B für die Heizungsregelung mit zwei Führungsgrößen und mit zwei Stellgrößen. Als erste Führungsgröße wird eine Größe $F1_{IST}$/$F1_{SOLL}$ gewählt, z.B. die Vorformlingstemperatur, und als zweite Führungsgröße eine Größe $F2_{IST}$/$F2_{SOLL}$. Als Stellgrößen werden zum einen die Heizleistung $P_{Heiz}$ der Heizvorrichtung gewählt und zum anderen die Kühlleistung $P_{Lüfter}$ der Lüftung. Zur Erhöhung der Robustheit der Regelung ist die in Figur 6 dargestellte Regelungsarchitektur als dezentraler Mehrgrößenregler ausgelegt.

Zur Verbesserung des instationären Verhaltens der Heizvorrichtung ist gemäß Figur 6 eine Störgrößenaufschaltung $k_2$ in den Regler integriert. Diese addiert in Abhängigkeit von der Differenz zwischen der IST-Ofentemperatur $T_{Ofen,IST}$ und der stationären Ofentemperatur $T_{Ofen,stationär}$, also der Ofentemperatur nach Erreichen des Gleichgewichtszustandes, mit einem Faktor eine zusätzliche prozentuale Leistung zur Gleichgewichtsheizleistung $P_{Heiz0}$. $P_{Heiz0}$ stellt einen Basiswert dar. Vor Erreichen des Gleichgewichtszustandes der Heizvorrichtung bzw. des Ofens ergibt sich also eine höhere Heizleistung, um die Vorformlinge trotzdem auf die gewünschte Temperatur zu bringen. Das in Figur 6 gezeigte Blockschaltbild sieht weiterhin einen Entkopplungszweig $k_1$ vor, um innere Kopplungen abzuschwächen. Im dargestellten Ausführungsbeispiel ist die Führungsgröße $F1_{IST}$/$F1_{SOLL}$, z.B. die Vorformlingstemperatur, gegenüber der Führungsgröße $F2_{IST}$/$F2_{SOLL}$ priorisiert. Die Störgrößenaufschaltung ist in dem Blockschaltbild als Störung $k_2$ dargestellt, die abhängig gemacht wird von der Differenz zwischen der Temperatur der Heizvorrichtung $T_{Ofen,stationär}$ bei Vorliegen von Gleichgewichtsbedingungen gegenüber der Ist-Temperatur der Heizvorrichtung $T_{Ofen,IST}$. Je größer diese Temperaturdifferenz ist desto größer ist der Störgrößeneffekt auszubilden und desto höher sollte der Faktor gewählt werden zur Erhöhung der Heizleistung gegenüber der Basisheizleistung.

Die Heizleistung $P_{Heiz0}$ sowie die Lüfterleistung $P_{Lüfter0}$ stellen eingestellte Leistungen für diese Stellglieder dar und beschreiben einen Arbeitspunkt bzw. einen Basispunkt. Diese Leistungen werden in Abhängigkeit der Führungsgrößen verändert.

Figur 7 zeigt in prinzipienhafte Darstellung den Aufbau eines Neurons eines neuronalen Netzes. Neuronale Netze zeichnen sich im Allgemeinen durch ihre Lernfähigkeit aus. Die Funktionsweise eines neuronalen Netzes ist an die Funktionsweise des menschlichen Gehirnes angelehnt, und es besteht aus vielen einzelnen Neuronen, welche über Synapsen miteinander verbunden sind. Figur 7 zeigt den Aufbau eines solchen einzelnen Neurons. Dieses Neuron besteht dabei aus der Summation der eingehenden Signale $u_1$, $u_2$,...,$u_n$ der Synapsen und aus einer Aktivierungsfunktion, welche aufgrund des Eingangswertes den Ausgangswert ermittelt. Die Ausprägung der Synapsen bestimmt die Signalstärke an der Summationsstelle. Dies kann im technischen Sinne als Gewichtung $w_1$, $w_2$, ..., $w_n$ gesehen werden. Mit einem Offset b kann der Arbeitspunkt der Aktivierungsfunktion vorgegeben werden. Gelernt wird in neuronalen Netzen in der Regel durch Veränderung der Gewichte $w_1$, $w_2$, ..., $w_n$ eines Neurons nach einem Lerngesetz.

Neuronale Netze werden oft in mehreren Schichten aufgebaut. Es ist dabei aber kaum möglich, das gelernte Verhalten zu interpretieren. Einschichtige Netze hingegen sind sehr gut interpretierbar und daher ist erfindungsgemäß mit Vorteil vorgesehen, dass ein einschichtiges Netz vorliegt.

Grundsätzlich sind neuronale Netze und das Lernverhalten neuronaler Netze sowie die technische Ausbildung neuronaler Netze hinlänglich bekannt. Aus diesem Grunde ist in den nachfolgenden Figuren lediglich in allgemeiner Weise angegeben, wie ein solches neuronales Netz in die Regelung einer Heizvorrichtung eingebunden werden kann.

Figur 8 zeigt einen selbstlernenden Regler 800, der zum Beispiel aus dem Stand der Technik bekannt ist. Dieser selbstlernende Regler 800 besteht aus einer herkömmlichen linearen Regelstrecke (S) sowie aus einer lernenden Störgrößenkompensation mittels eines GRNN, wobei GRNN als Kurzform steht für ein General-Regression-Neural-Network. Die ansonsten lineare Regelstrecke, zusammengesetzt aus $G_1(s)$ sowie $G_2(s)$, wird von einer nichtlinearen und unbekannten Störgröße $NL$ erfasst. Die Störgröße hängt von der messbaren Größe p ab und greift am Punkt K in die Regelstrecke ein. Die Aufgabe des GRNN ist es nun, den Einfluss der nichtlinearen Störfunktion auf den Ausgang zu kompensieren. Erfindungsgemäß geht es um die Kompensation des Umstandes, dass die Heizvorrichtung noch nicht seinen thermodynamischen Gleichgewichtszustand erreicht hat. Deshalb finden die Vorformlinge Aufheizbedingungen vor, die vom Gleichgewichtszustand abweichen. Das neuronale Netz GRNN soll diesen Effekt durch einen Lernprozess und durch Störgrößenkompensation aufheben.

Der Vorteil der in Figur 8 dargestellten Reglerstruktur ist, dass auch bisher im Stand der Technik schon verwendete Regelkreise nicht grundlegend verändert werden müssen. Es muss lediglich das Kompensationssignal des neuronalen Netzes zum Stellsignal des Reglers addiert werden. Die bestehende Störgrößenkompensation des Basisreglers kann also modular durch das neuronale Netz ersetzt werden, oder falls keine Störgrößenkompensation des Basisreglers vorgesehen ist, kann eine solche Störgrößenkompensation nunmehr hinzugefügt werden.

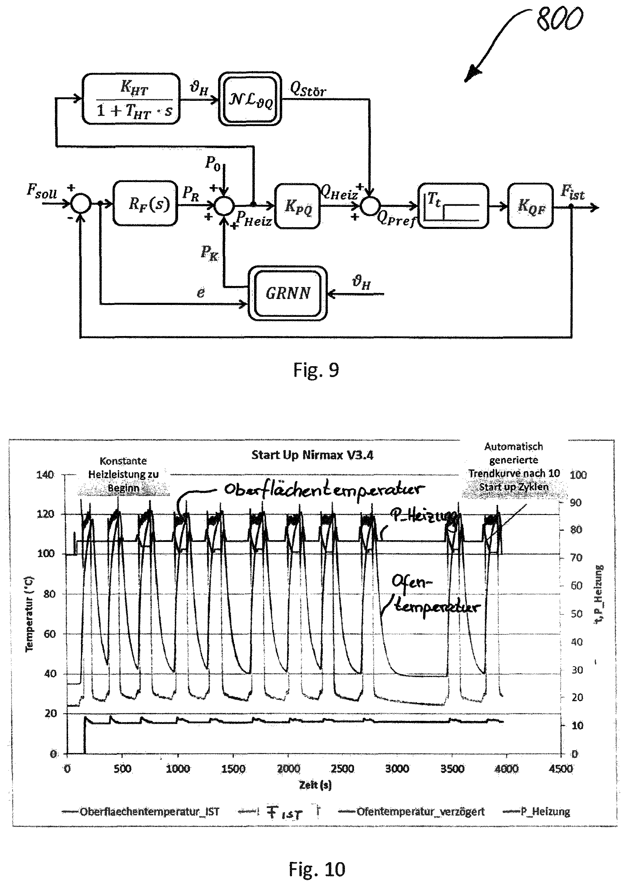

Figur 9 zeigt ein vereinfachtes Störmodell des Teilregelsystems Oberflächentemperatur des Vorformlings und Heizvorrichtung. An die Stelle der im Stand der Technik bekannten "festen Störgrößenaufschaltung" durch Erhöhung der Heizleistung um einen konstanten Faktor tritt nun ein neuronales Netz GRNN. Die Störung wird zum Beispiel als unbekannte nichtlineare Funktion $\mathcal{NL}_{\vartheta Q}$ dargestellt. Diese hängt von der zum Beispiel mit einem PT-100 gemessenen Temperatur $\vartheta_H$ der Heizvorrichtung ab, zum Beispiel der Temperatur $\vartheta_H$ des Reflektors in der Heizvorrichtung, und gibt eine in den Vorformling abgestrahlte Energiemenge $Q_{Stör}$ ab. Der Reflektor zeigt dabei ein bestimmtes Verhalten, welches abhängig ist von der eingestellten Leistung der Heizstrahler der Heizvorrichtung. Die in den Vorformling eingetragene Gesamtenergie $Q_{Pref}$ setzt sich zum einen aus dem sekundären Energieeintrag durch zum Beispiel erwärmte Reflektoren, sowie aus dem primären Energieeintrag $Q_{Heiz}$ durch die Strahlung der Heizstrahler zusammen. Die primäre Heizenergie stellt sich nach der Startupphase um den Arbeitspunkt ein. Die Dynamik der Heizung sowie die Totzeiten der Regelstrecke werden vereinfacht zur Totzeit $T_t$ zusammengefasst.

Um das Fehlen der Aufheizenergie $Q_{Stör}$ zu kompensieren schaltet das neuronale Netz GRNN in Abhängigkeit von der in der Heizvorrichtung gemessenen Temperatur eine Zusatzleistung $P_k$ auf. Um das neuronale Netz bei mehreren Startups der Heizvorrichtung zu trainieren, wird der Regelfehler e verwendet.

Figur 10 illustriert das positive Ergebnis einer um ein neuronales Netz ergänzten Steuerungseinrichtung für eine Heizvorrichtung. Entlang der x-Achse ist die Zeit in Sekunden aufgetragen und in y-Richtung ist einerseits auf der linken Seite eine Ofentemperatur und eine gemessene Oberflächentemperatur der Vorformlinge aufgetragen. Andererseits ist auf der rechten Seite eine Heizleistung der Heizvorrichtung aufgetragen. Es sind entlang der Zeitachse mehrere Startupvorgänge aufgetragen. Anhand der jeweils gemessenen Oberflächentemperatur der Vorformlinge ist erkennbar, dass mit zunehmender Zahl der Startupvorgänge eine signifikante Verringerung der Temperaturstreuung in der gemessenen Oberflächentemperatur eintritt. Dies ist zum Beispiel daran zu erkennen, dass beim ersten Startupvorgang, bei der die Heizleistung $P_{Heizung}$ konstant gehalten wurde, die gemessene Oberflächentemperatur der Vorformlinge eine generell ansteigende Tendenz aufweist. Diese ansteigende Tendenz flacht mit jedem weiteren Startupvorgang ab und ist bei den letzten Startupvorgängen kaum noch ausgeprägt. Vielmehr variieren hier die Oberflächentemperaturen der vermessenen Vorformlinge um eine im Wesentlichen horizontal verlaufende Mitteltemperatur. Im Ergebnis erfolgt die Temperaturkonditionierung der Vorformlinge bei späteren Startupvorgängen mit deutlich geringerer Temperaturstreuung und die daraus hergestellten Behälter zeigen deutlich weniger Schwankungen in ihren Eigenschaften, z.B. in der Wanddicke. Insgesamt kommt es zu einer deutlichen Qualitätsverbesserung der hergestellten Behälter.

**Patentansprüche**

1. Verfahren zum Betreiben einer Heizvorrichtung (116) für die Temperaturkonditionierung von Vorformlingen (14) aus einem thermoplastischen Material in der Heizvorrichtung (116), wobei der jeweilige Vorformling (14) durch die thermische Konditionierung in der Heizvorrichtung (116) auf einen nachfolgenden Umformungsvorgang vorbereitet wird, bei dem mit einem unter einem Druck in den Vorformling (14) zugeführten Umformfluid der Vorformling (14) in einen Behälter (12) umgeformt wird, wobei die Heizvorrichtung (116) in mehreren Betriebszuständen betrieben wird, nämlich wenigstens in einem ersten und in einem zweiten Betriebszustand, wobei der Betrieb der Heizvorrichtung (116) im zweiten Betriebszustand für eine Startupphase der Heizvorrichtung (116) erfolgt, in der sich eine Temperatur der Heizvorrichtung (116) einer Gleichgewichtstemperatur eines thermodynamisch stabilen Gleichgewichtszustandes der Heizvorrichtung (116) annähert, wobei der Betrieb der Heizvorrichtung (116) im ersten Betriebszustand erfolgt für einen sich an die Startupphase anschließenden Dauerbetrieb der Heizvorrichtung (116), **dadurch gekennzeichnet, dass** im zweiten Betriebszustand die Heizvorrichtung (116) mit einem sich zeitlich verändernden Heizleistungswert betrieben wird.

2. Verfahren nach Anspruch 1, **dadurch gekennzeichnet, dass** im ersten Betriebszustand eine Regelung der Heizleistung der Heizvorrichtung (116) innerhalb eines Regelkreis nach einem Führungswert $F_{IST}/F_{SOLL}$ erfolgt.

3. Verfahren nach Anspruch 1 oder 2, **dadurch gekennzeichnet, dass** in der Heizvorrichtung (116) ein Temperatursensor (160) angeordnet wird zur Erfassung einer Heizvorrichtungstemperatur, wobei der Übergang vom zweiten in den ersten Betriebszustand bei Erreichen einer vorgegebenen Heizvorrichtungstemperatur erfolgt.

4. Verfahren nach Anspruch 3, **dadurch gekennzeichnet, dass** der zweite Betriebszustand der Heizvorrichtung (116) erst ab Erreichen einer Mindestheizvorrichtungstemperatur beginnt.

5. Verfahren nach einem der vorhergehenden Ansprüche, **dadurch gekennzeichnet, dass** die Steuerung bzw. Regelung im zweiten Betriebszustand für einen aktuell vorliegenden zweiten Betriebszustand in Abhängigkeit von Ergebnissen von Messungen an Vorformlingen (14) oder daraus hergestellten Behältern (12) erfolgt, die die Heizvorrichtung (116) in einem zeitlich zurückliegenden zweiten Betriebszustand durchlaufen haben.

6. Verfahren nach Anspruch 5, **dadurch gekennzeichnet, dass** die Ergebnisse der Messungen einem neuronalen Netz (800) zugeführt werden, insbesondere einem einschichtigen neuronalen Netz (800), insbesondere einem GRNN (generalregression-neural-network).

7. Verfahren nach Anspruch 6, **dadurch gekennzeichnet, dass** die Regelung des zweiten Betriebszustandes als Störgröße im Regler der Heizvorrichtung (116) im ersten Betriebszustand implementiert ist, insbesondere als selbstlernende Störgrößenkompensation, insbesondere indem den Stellsignalen des Reglers für den ersten Betriebszustand im zweiten Betriebszustand ein Kompensationssignal hinzugefügt wird.

8. Heizvorrichtung (116) für die Temperaturkonditionierung von Vorformlingen (14) aus einem thermoplastischen Material in der Heizvorrichtung (116), wobei der jeweilige Vorformling (14) durch die thermische Konditionierung in der Heizvorrichtung (116) auf einen nachfolgenden Umformungsvorgang vorbereitet wird, bei dem mit einem unter einem Druck in den Vorformling (14) zugeführten Umformfluid der Vorformling (14) in einen Behälter (12) umgeformt werden kann, wobei die Heizvorrichtung (116) eine Steuereinrichtung (400, B, 800) aufweist, die die Heizvorrichtung (116) wenigstens in einem ersten Betriebszustand und in einem zweiten Betriebszustand betreibt, wobei der Betrieb der Heizvorrichtung (116) im zweiten Betriebszustand ein Startupzustand der Heizvorrichtung (116) ist, in der sich eine Temperatur der Heizvorrichtung (116) einer Gleichgewichtstemperatur eines thermodynamisch stabilen Gleichgewichtszustandes der Heizvorrichtung (116) annähert, wobei der Betrieb der Heizvorrichtung (116) im ersten Betriebszustand ein sich an den Startupzustand anschließender Dauerbetrieb der Heizvorrichtung (116) ist, wobei die Steuereinrichtung (400, B, 800) zur Ausführung des Betriebsverfahrens nach einem der Ansprüche 1 bis 7 ausgebildet ist.

**9.** Maschine für die Herstellung von Behältern (12) aus Vorformlingen (14) durch Umformung mittels eines unter Druck in den Vorformling (14) eingeleiteten Formfluides und mit einer Heizvorrichtung (116) für die Temperaturkonditionierung der Vorformlinge (14), **dadurch gekennzeichnet, dass** die Heizvorrichtung (116) nach Anspruch 8 ausgeführt ist.

**Claims**

**1.** A method of operating a heating device (116) for temperature conditioning of preforms (14) of a thermoplastic material in the heating device (116), wherein the respective preform (14) is prepared for a subsequent forming process by thermal conditioning in the heating device (116), wherein the preform (14) is formed into a container (12) with a forming fluid supplied under pressure into the preform (14), wherein the heating device (116) is operated in several operating states, i.e. at least in a first operating state and in a second operating state, wherein the operation of the heating device (116) in the second operating state takes place for a start-up phase of the heating device (116), in which a temperature of the heating device (116) approaches an equilibrium temperature of a thermodynamically stable equilibrium state of the heating device (116), wherein the operation of the heating device (116) in the first operation state takes place for continuous operation of the heating device (116) following the start-up phase, **characterized in that** in the second operating state, the heating device (116) is operated with a heating power value, which changes over time.

**2.** The method according to Claim 1, **characterized in that** in the first operating state, the heating output of the heating device (116) is controlled within a control loop according to a reference value $F_{ACTUAL}/F_{SETPOINT}$.

**3.** The method according to Claim 1 or 2, **characterized in that** a temperature sensor (160) is arranged in the heating device (116) for detecting a heating device temperature, the transition from the second to the first operating state taking place when a predetermined heating device temperature is reached.

**4.** The method according to claim 3, **characterized in that** the second operating state of the heating device (116) only begins when a minimum heating device temperature is reached.

**5.** The method according to any of the preceding claims, **characterized in that** the control or regulation in the second operating state for a currently present second operating state is carried out depending on the results of measurements on preforms (14) or containers (12) produced therefrom, which have passed through the heating device (116) in a past second operating state.

**6.** The method according to claim 5, **characterized in that** the results of the measurements are supplied to a neural network (800), in particular a single-layer neural network (800), in particular a GRNN (general regression neural network).

**7.** The method according to claim 6, **characterized in that** the control of the second operating state is implemented as a disturbance variable in the controller of the heating device (116) in the first operating state, in particular as a self-learning disturbance variable compensation, in particular by adding a compensation signal to the control signals of the controller for the first operating state in the second operating state.

**8.** A heating device (116) for the temperature conditioning of preforms (14) made of a thermoplastic material in the heating device (116), wherein the respective preform (14) is prepared for a subsequent forming process by the thermal conditioning in the heating device (116), in which the preform (14) can be formed into a container (12) with a forming fluid supplied under pressure into the preform (14), wherein the heating device (116) comprises a control device (400, B, 800), which operates the heating device (116) at least in a first operating state and in a second operating state, wherein the operation of the heating device (116) in the second operating state is a start-up state of the heating device (116), in which a temperature of the heating device (116) approaches an equilibrium temperature of a thermodynamically stable equilibrium state of the heating device (116), wherein the operation of the heating device (116) in the first operating state is a continuous operation of the heating device (116) following the start-up state, wherein the control device (400, B, 800) is designed to carry out the operating method according to one of claims 1 to 7.

**9.** A machine for the production of containers (12) from preforms (14) by forming by means of a moulding fluid introduced under pressure into the preform (14) and having a heating device (116) for temperature conditioning of the preforms (14), **characterized in that** the heating device (116) is designed according to claim 8.

## Revendications

1. Procédé de commande d'un dispositif de chauffage (116) pour le conditionnement thermique de préformes (14) en un matériau thermoplastique dans le dispositif de chauffage (116), les préformes (14) étant respectivement préparées par le conditionnement thermique dans le dispositif de chauffage (116) à un processus de formage suivant dans le cadre duquel la préforme (14) est transformée en un récipient (12) à l'aide d'un fluide de formage introduit sous pression dans la préforme (14), le dispositif de chauffage (116) opérant selon plusieurs états de fonctionnement, à savoir au moins un premier et un second état de fonctionnement, le fonctionnement du dispositif de chauffage (116) selon le second état étant destiné à une phase de démarrage du dispositif de chauffage (116) au cours de laquelle une température du dispositif de chauffage (116) s'approche d'une température d'équilibre d'un état d'équilibre thermodynamique stable du dispositif de chauffage (116), le fonctionnement du dispositif de chauffage (116) selon le premier état étant destiné à service continu du dispositif de chauffage (116) qui suit la phase de démarrage, **caractérisé en ce que,** dans son second état de fonctionnement, le dispositif de chauffage (116) opère avec une puissance de chauffage variable dans le temps.

2. Procédé selon la revendication 1, **caractérisé en ce que,** dans le premier état de fonctionnement, une régulation de la puissance de chauffage du dispositif de chauffage (116) a lieu à l'intérieur d'une boucle d'asservissement en fonction d'une valeur pilote Peff./Pcons.

3. Procédé selon la revendication 1 ou 2, **caractérisé en ce que** un capteur de température (160) est agencé dans le dispositif de chauffage (116) pour saisir la température du dispositif de chauffage, la transition entre le premier et le second état de fonctionnement ayant lieu lorsqu'une température du dispositif de chauffage prédéfinie est atteinte.

4. Procédé selon la revendication 3, **caractérisé en ce que** le second état de fonctionnement du dispositif de chauffage (116) ne commence que lorsqu'une température minimale du dispositif de chauffage est atteinte.

5. Procédé selon l'une des revendications précédentes, **caractérisé en ce que** la commande ou la régulation du second état de fonctionnement, pour un second état de fonctionnement actuel, a lieu en fonction de mesures effectuées sur la préforme (14) ou sur les récipients (12) produits à partir de celles-ci, lesquels ont parcouru le dispositif de chauffage (116) au cours d'un second état de fonctionnement antérieur.

6. Procédé selon la revendication 5, **caractérisé en ce que** les résultats des mesures sont transmis à un réseau neuronal (800), notamment à un réseau neuronal monocouche (800), notamment un réseau GRNN (generalregression-neural-network).

7. Procédé selon la revendication 6, **caractérisé en ce que** la régulation du second état de fonctionnement est implémentée comme grandeur perturbatrice dans le régulateur du dispositif de chauffage (116) pour le premier état de fonctionnement, notamment comme compensation de grandeur perturbatrice autoadaptative, notamment **en ce qu'**un signal de compensation est, dans le second état de fonctionnement, ajouté aux signaux de réglage du régulateur pour le premier état de fonctionnement.

8. Dispositif de chauffage (116) pour le conditionnement thermique de préformes (14) en un matériau thermoplastique dans le dispositif de chauffage (116), les préformes (14) étant respectivement préparées par le conditionnement thermique dans le dispositif de chauffage (116) à un processus de formage suivant dans le cadre duquel la préforme (14) peut être transformée en un récipient (12) à l'aide d'un fluide de formage introduit sous pression dans la préforme (14), le dispositif de chauffage (116) présentant un dispositif de commande (400, B, 800) lequel commande le dispositif de chauffage (116) de façon à ce que celui-ci opère avec au moins un premier et un second état de fonctionnement, le second état de fonctionnement du dispositif de chauffage (116) étant une phase de démarrage du dispositif de chauffage (116) au cours de laquelle une température du dispositif de chauffage (116) s'approche d'une température d'équilibre d'un état d'équilibre thermodynamique stable du dispositif de chauffage (116), le fonctionnement du dispositif de chauffage (116) selon le premier état étant un service continu du dispositif de chauffage (116) qui suit la phase de démarrage, le dispositif de commande (400, B, 800) pour l'exécution du procédé étant réalisé selon l'une des revendications 1 à 7.

9. Machine pour la production de récipients (12) à partir de préformes (14) par formage à l'aide d'un fluide de formage introduit sous pression dans la préforme (14), et avec un dispositif de chauffage (116) pour le conditionnement thermique des préformes (14), **caractérisé en ce que** le dispositif de chauffage (116) est réalisé selon la revendication 8.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4340291 A1
- DE 4212583 A1
- DE 2352926 A1
- US 7914726 B2
- DE 2010007541 A1
- EP 2749397 A1
- WO 2011063784 A2
- FR 2965746 A1